# EUROPEAN PATENT SPECIFICATION

(11) **EP 2 353 828 B1**
(45) Date of publication and mention of the grant of the patent: **22.08.2012**
(21) Application number: 10197063.0
(22) Date of filing: 27.12.2010
(51) Int. Cl.: B29C 33/38, B29C 33/46, B29C 43/02, B29C 43/50, B29D 11/00, G02B 3/00

(54) **Molding die for optical molding product, method of molding optical molding product and lens array**
Form für ein optisches Formprodukt, Verfahren zum Formen des optischen Formprodukts und Linsenanordnung
Matrice de moulage pour produit de moulage optique, procédé pour le moulage d'un produit de moulage optique et réseau de lentilles

(30) Priority: 08.02.2010 JP 2010025700
(43) Date of publication of application: 10.08.2011
(73) Proprietor: FUJIFILM Corporation, Tokyo (JP)
(72) Inventor: Fujiwara, Takayuki, Saitama (JP)
(74) Representative: Klunker . Schmitt-Nilson . Hirsch

(56) References cited:
- WO-A1-2004/020182
- WO-A1-2008/153102
- JP-A- 10 221 507
- JP-A- 2003 211 504

## Description

### BACKGROUND

### 1. Technical Field

The present invention relates to a molding die for an optical molding product, a method of molding the optical molding product, and a lens array.

### 2. Related Art

Nowadays, a mobile terminal as an electronic equipment such as a cellular phone, PDA (Personal Digital Assistant), or the like is equipped with a small and thin image pickup unit. In general, such image pickup unit is equipped with a solid state image pickup device such as a CCD (Charge Coupled Device) image sensor, a CMOS (Complementary Metal Oxide Semiconductor) image sensor, or the like, and a lens for forming an image of a subject on the solid state image pickup device.

In compliance with a reduction in size and thickness of the mobile terminal, a reduction in size and thickness is requested of the image pickup unit. Also, in order to achieve a reduction in cost of the mobile terminal, an improvement in efficiency of manufacturing steps is desired. As such method of manufacturing a large number of small lenses, such a method of mass-producing a lens module is proposed that a lens array as an optical molding product in which a plurality of lenses are formed on a substrate portion should be manufactured, and then a plurality of lenses should be separated respectively by cutting the substrate portion.

Also, such a method of mass-producing an image pickup unit is proposed that a substrate portion, on which a plurality of lens portions are formed, and a semiconductor wafer, on which a plurality of solid state image pickup devices are formed, should be combined together, and then the semiconductor wafer as well as the substrate portion is cut to contain each lens portion and the solid state image pickup device as a set.

As an example, the lens array is manufactured by following steps. As such manufacturing method, the method shown in following Patent Document 1 (WO-A-2008/153102 corresponding to EP-A-2168746) can be cited.
(1) A shape of one transferred member (die) is transferred to a resin in such a state that a resin is coated on a wafer.
(2) The step of transferring the shape of the die is repeated about 1500 to 2400 number of times. Thus, the master lens array including 1500 to 2400 pieces of the lens shape is formed on one wafer.
(3) The stamper (Ni electroforming die) is manufactured by depositing the metal ion such as Ni, or the like on lens surfaces of the master lens array by the electroforming.
(4) The stamper is employed as a pair of mold members, and then a thermosetting or photo-curable resin as the molding material is supplied to the lower mold member out of a pair of mold members.
(5) The mold material supplied to the lower mold member is pressed by the upper mold member. Thus, a resin is deformed to copy the mold surfaces of the upper mold member and the lower mold member.
(6) The resin being held between the upper mold member and the lower mold member is irradiated with a light or heat, and is cured. As a result, the lens array is molded.

### SUMMARY

As in Patent Document 1, in case a lens array in which a great number (several hundred to several thousand) of lens portions are on a substrate of about several inch to 10 inch size is molded, a shape of the lens array is flat, and therefore a contact area between the mold surfaces of the upper and lower mold members and the molding product is large. Also, a space between the mold surfaces and the molded surface of the lens array is brought into a vacuum condition, and thus a resistance force acting in the mold-releasing becomes large. Therefore, in comparison with the case where the individual lenses are molded, the lens array sticks to the mold surfaces of the mold members and thus the mold releasing becomes difficult. Also, when the mold releasing of the lens array is tried by applying the load from the outside, it is feared that a defect such as a warp, a deformation, or the like is caused in the lens array or the lens array is damaged.

In Patent Document 2 (JP-A-2009-083194), it is set forth that, in order to release the molding product from the mold members, the molding product should be released from the mold members by supplying an air from the die side. However, when this method is applied to the lens array, a shape of the air supply hole provided to the die is transferred onto the surface of the molding product. Thus, a lens shape of the lens array is harmfully influenced, and it is unavoidable that degradation in the optical characteristics is caused.

It is supposed to contain a releasing agent in the molding material so as to improve the releasability. According to this method, in some cases the surface of the molding product is spoiled by the material of the releasing agent. As a result, from such an aspect that adhesion of the soil onto the surface must be avoided to prevent the degradation of the optical characteristics of the optical device such as the lens array, or the like, it is impossible to say that the method of using the releasing agent is suitable for an improvement of the releasability.

Also, for the purpose of improving the releasability of the molding die, it is supposed to forming a releasing film on the surface of the die. In this case, it is feared that degradation of the optical characteristics of the surface of the molding product is caused due to the peeling of the releasing film.

Further, it is supposed to release the molding product by pushing out a mechanical component such as a pin, or the like from the mold surface into the molding product. In this case, when it is intended that a dimensional error or a clearance between the driven mechanical component and the die should be suppressed small, a structure of the molding die becomes complicated, and also an increase in cost of the molding die is unavoidable.

JP 10 221507 A discloses a correcting lens for cathode-ray tube exposure comprising a metal sheet substrate and a resin layer formed on the metal sheet within a mould. The sheet metal forms one surface of the mould cavity, the other surface of the cavity is structured in accordance with the shape of the outer surface of the resin layer to be obtained.

WO 2008/153102 A1 discloses a lens moulding method but the document does not disclose where and why the moulding product is released from the mould members.

WO 204/020182 A1 discloses a method of moulding articles in which the moulded article is released from the mould by ejecting an air blast from gaps in one mould half.

The present invention provides a molding die for an optical molding product, a method of molding the optical molding product and a lens array, which are capable of releasing a molded lens array from a die without damage.

According to an aspect of the invention, a molding die used to mold integrally an optical molding product, which includes a substrate portion and a plurality of lens portions formed on the substrate portion, with a molding material, includes the features of claim 1.

According to another aspect of the invention, a method of molding an optical molding product, which is applied to mold integrally an optical molding product, which includes a substrate portion and one or a plurality of lens portions formed on the substrate portion, with a molding material, includes the features of claim 5.

According to the invention, a gas can be supplied through the porous portions in the mold member, a clearance is produced between the mold members and the optical molding product by the gas being supplied through the porous portions after the optical molding product is cured, and thus the optical molding product can be released from the mold members. Therefore, the mold releasing can be done not to apply the load to the optical molding product from the outside, and the trouble such as the deformation, or the like is not caused in the optical molding product. Also, it is merely requested that the porous portions should be formed in a part of the mold members, and there is no necessity to employ a complicated structure such as a mechanical structure for driving a pin, or the like. Therefore, an increase in cost of the molding die can be avoided. Further, since the mold releasing agent or the mold releasing film is not used, degradation of the optical characteristics of the optical molding product to be molded can be prevented.

### BRIEF DESCRIPTION OF THE DRAWINGS

FIG.1 is a plan view showing an example of a structure of a lens array.
FIG.2 is a sectional view of the structure of the lens array shown in FIG.1, which is taken along an A-A line.
FIG.3 is a sectional view showing an example of a structure of a lens module.
FIG.4 is a sectional view showing an example of a structure of an image pickup unit.
FIG. 5 is a sectional view showing a molding die.
FIGs.6A to 6C are sectional views explaining procedures of molding a lens array.
FIGs.7A and 7B are sectional views explaining procedures of releasing the lens array.
FIGs.8A and 8B are plan views showing a configurative example of a molding die.

### DETAILED DESCRIPTION

Exemplary Embodiments of the present invention will be explained in detail with reference to the drawings hereinafter.

First, a structure of a lens array as an example of an optical molding product and respective structures of a lens module and an image pickup unit equipped with the lens array will be explained hereunder.

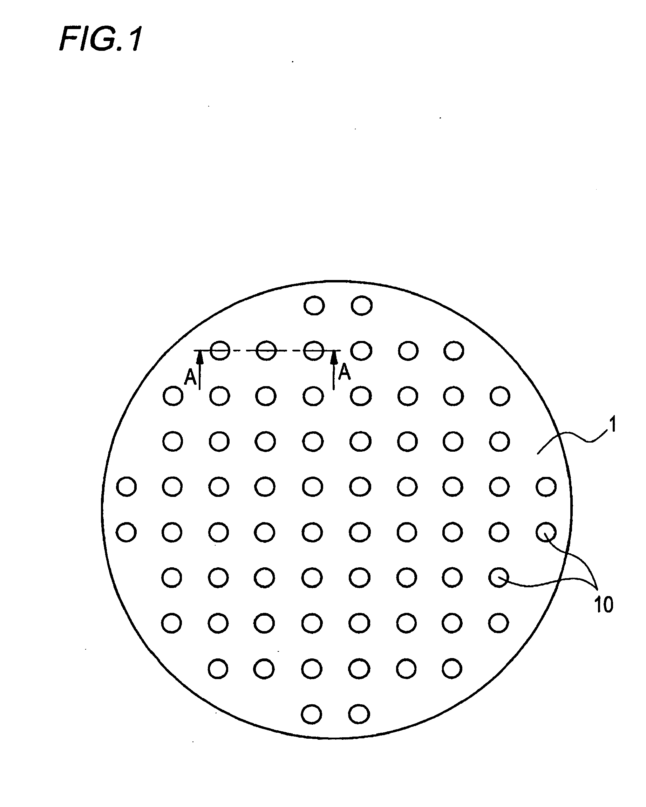

FIG. 1 is a plan view of a lens array. The lens array has a substrate portion 1 and a plurality of lens portions 10 that are aligned on the substrate portion 1.

The lens portions 10 are formed of the same material as the substrate portion 1, and are molded integrally with the substrate portion 1.

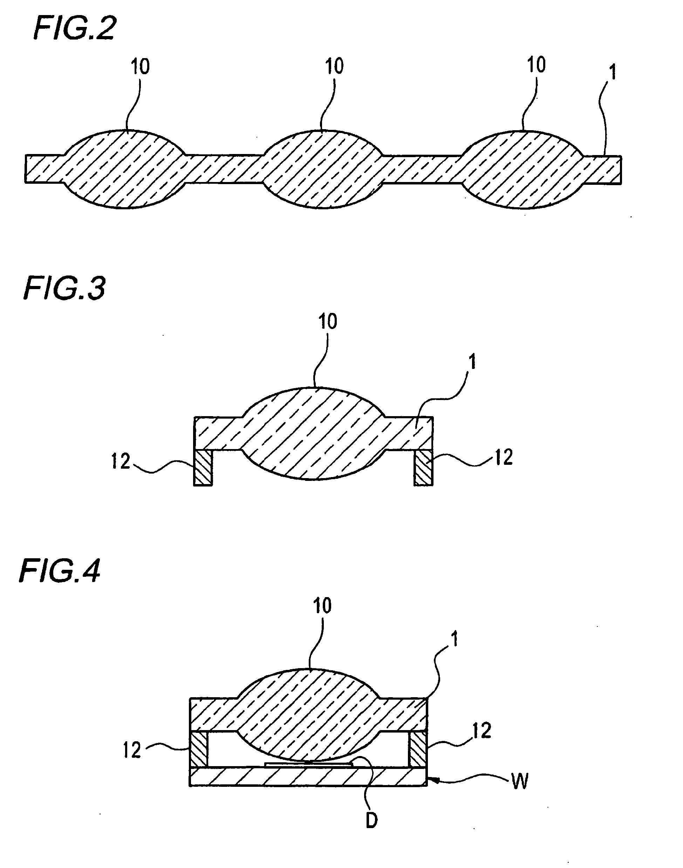

FIG.2 is a sectional view of the lens array shown in FIG.1, which is taken along an A-A line. The lens portion 10 formed on both surfaces of the substrate portion 1 has a convex lens shape having a convex surface that protrudes from a planar portion of the substrate portion 1. A shape of the lens portion 10 is not particularly limited, and is changed appropriately according to the application, or the like.

The lens array is obtained by molding the molding material using the molding dies and then curing this molding material.

FIG. 3 is a sectional view of a lens module.

The lens module has a structure that contains the substrate portion 1, and the lens portion 10 that is molded integrally with the substrate portion 1. Also, a spacer 12 is provided on one surface of the substrate portion 1 of the lens module.

The spacer 12 acts as the member that maintains an interval when the lens module is stacked on other member.

The lens module is obtained when the substrate portion 1 of the lens array shown in FIG. 1 and FIG.2 is cut separately every lens portion 10 by the dicing. The spacer 12 is provided to the lens module when a spacer member is formed in advance in a dicing area between the substrate portions 1 and then is separated into two parts by the dicing, and thus the spacer 12 is attached to the substrate portion 1 of each lens module.

FIG.4 is a sectional view of an image pickup unit.

The image pickup unit has the above lens module, and a sensor module. The lens portion 10 of the lens module forms an image of a subject on an imaging device D that is provided on the sensor module side. The substrate portion 1 of the lens module and a semiconductor substrate W of the sensor module have the substantially identical rectangular shape respectively when viewed from the top.

The sensor module contains the semiconductor substrate W and the imaging device D provided on the semiconductor substrate W. The semiconductor substrate W is formed by cutting the wafer formed of the semiconductor material such as silicon, or the like into a rectangular shape, for example, when viewed from the top. The imaging device D is provided in the almost center portion of the semiconductor substrate W. The imaging device D is composed of a CCD sensor or a CMOS sensor, for example. The sensor module can be constructed by bonding the chip-shaped imaging device D on the semiconductor substrate on which the wirings, and the like are formed. Also, the imaging device D may be constructed by forming the electrodes, the insulating film, the wirings, etc. on the semiconductor substrate W. At that time, the film forming step, the photolithography step, the etching step, the impurity adding step, and the like, which have already been well known, may be applied repeatedly to the semiconductor substrate W.

The substrate portion 1 of the lens module is stacked on the semiconductor substrate W of the sensor module via the spacer 12. The spacer 12 of the lens module and the semiconductor substrate W of the sensor module are adhered together by using the adhesive, or the like. The spacer 12 is designed such that the lens portion 10 of the lens module can form an image of a subject on the imaging device D of the sensor module. The spacer 12 is formed to have a thickness that can maintain a predetermined distance between the lens portion 10 and the imaging device D such that the lens portion 10 does not contact the sensor module.

A shape of the spacer 12 provided between the lens module and the image pickup unit is not particularly limited, and can be changed appropriately within a range in which the positional relationship needed to separate the substrate portion 1 of the lens module and the semiconductor substrate W of the sensor module by a predetermined distance can be maintained. For example, the spacer 12 may be formed of a grid-like member when the substrate portion 1 is viewed from the top or the spacer 12 may be formed of a plurality of column-like members that are provided around the lens portion 10. Also, the spacer 12 may be formed of a frame-like member that surrounds the periphery of the imaging device D of the sensor module. When the imaging device D is surrounded by the frame-like spacer 12 and is isolated from the outer side, a light can be blocked in such a manner that the light except the light that is to be passed through the lens is not incident on the imaging device D. Also, when the imaging device D is shield tightly from the outside, it can be prevented that the dust adheres to the imaging device D.

The lens module may be constructed to have a plurality of substrate portions 1 on each of which the lens portion 10 is formed. At this time, the substrate portions 1 that are stacked mutually are assembled together via the spacer 12. Also, the image pickup unit may be constructed by bonding the sensor module to the substrate portion 1 located in the lowest position in the lens module, in which a plurality of substrate portions 1 on which the lens portion 10 is formed respectively are provided, via the spacer 12.

The image pickup unit is reflow-mounted on the circuit substrate (not shown) that is built in the mobile terminal, or the like. A solder paste is appropriately printed in advance in the position of the circuit substrate where the image pickup unit is to be mounted. Then, the image pickup unit is put in this position of the circuit substrate. Then, the heating process such as the irradiation of infrared rays, the blowing of a hot air, or the like is applied to the circuit substrate including the image pickup unit, and thus the image pickup unit is deposited on the circuit substrate.

Next, the molding material used to mold the lens array will be explained hereunder.

As the molding material, a resin that has flowablity at a time of molding and is cured by applying the heating or irradiating the light after the molding can be employed. As such resin, either of a thermosetting resin and a resin that is cured by irradiating an active energy ray (e.g., ultraviolet irradiation, electron-beam irradiation) may be employed.

From a viewpoint of moldability such as a transfer aptitude of a mold shape at a time of molding, or the like, it is preferable that the resin should have adequate flowablity before the resin is cured. Concretely the resin which is a liquid at a room temperature and whose viscosity is about 1000 to 50000 mPa·s is preferable.

Meanwhile, it is preferable that the resin should have a thermal resistance that does not cause the thermal deformation throughout the reflow step after such resin is cured. From the above viewpoints, a glass transition temperature of the cured resin composite should be set preferably to 200 °C or more, more preferably to 250 °C or more, and particularly preferably to 300 °C or more. In order to give a high thermal resistance to the resin composite, it is necessary that the mobility should be bound at a molecular level. As the effective means, there are listed (1) the means for improving a crosslinking density per unit volume, (2) the means for utilizing the resin having a rigid ring structure (for example, the resin having an alicyclic structure such as cyclohexane, norbomane, tetracyclododecane, or the like, an aromatic ring structure such as benzene, naphthalene, or the like, a cardo structure such as 9,9'-biphenylfluorene, or the like, or a spiro structure such as spirobiindane, or the like. Concretely, the resin set forth in JP-A-9-137043 , JP-A-10-67970 , JP-A-2003-55316 , JP-A-2007-334018 , JP-A-2007-238883 , or the like, for example), (3) the means for dispersing uniformly the high Tg material such as inorganic fine particles, or the like (e.g., set forth in JP-A-5-209027 , JP-A-10-298265 , or the like), and others. These means may be employed in plural in combination. It is preferable that the combination should be adjusted within a cope not to spoil other characteristics such as flowability, a shrinkage rate, a refractive index, and the like.

Also, from the viewpoint of a form transfer precision, it is preferable that the resin composite whose volume shrinkage rate caused by a curing reaction is small should be employed as the resin composite. A curing shrinkage rate of the resin should be set preferably to 10 % or less, more preferably to 5 % or less, and particularly preferably to 3 % or less.

As the resin composite whose curing shrinkage rate is low, for example, (1) the resin composite containing a curing agent (a prepolymer, or the like) of high molecular weight (e.g., set forth in JP-A-2001-19740 , JP-A-2004-302293 , JP-A-2007-211247 , or the like. A number-average molecular weight of the curing agent of high molecular weight should be set preferably to a range of 200 to 100,000, more preferably to a range of 500 to 50,000, and particularly preferably to a range of 1,000 to 20,000. Also, a ratio calculated by the number-average molecular weight of the curing agent/the number of curing reaction group should be set preferably to a range of 50 to 10,000, more preferably to a range of 100 to 5,000, and particularly preferably to a range of 200 to 3,000), (2) the resin composite containing an unreactive material (organic/inorganic fine particles, unreactive resin, or the like)(e.g., set forth in JP-A-6-298883 , JP-A-2001-247793 , JP-A-2006-225434 , or the like), (3) the resin composite containing a low-shrinkage crosslinking reaction group (for example, a ring-opening polymerization group (for example, epoxy group (e.g., set forth in JP-A-2004-210932 , or the like), an oxetanyl group (e.g., set forth in JP-A-8-134405 , or the like), an episulfide group (e.g., set forth in JP-A-2002-105110 , or the like), a cyclic carbonate group (e.g., set forth in JP-A-7-62065 , or the like), an en/thiol cure group (e.g., set forth in JP-A-2003-20334 , or the like), a hydrosilylation cure group (e.g., set forth in JP-A-2005-15666 , or the like), or the like), (4) the resin composite containing a rigid skelton resin (fluorene, adamantane, isophorone, or the like)(e.g., set forth in JP-A-9-137043 , or the like), (5) the resin composite in which an interpenetrating network (a so-called IPN structure) containing two types of monomers whose polymerization groups are different is formed (e.g., set forth in JP-A-2006-131868 , or the like), (6) the resin composite containing an expansive material (e.g., set forth in JP-A-2004-2719 , JP-A-2008-238417 , or the like), and the like can be listed, and these resin composites can be utilized preferably in the present invention. Also, from the viewpoint of physical property optimization, it is preferable that a plurality of curing shrinkage reducing means mentioned above should be employed in combination (for example, the prepolymer containing the ring-opening polymerization group and the resin composite containing the fine particles, and the like).

Also, two types of the resins whose Abbe's numbers are different, e.g., whose Abbe's numbers are high and low, or more is desired as the lens array.

In the resin on the high Abbe's number side, the Abbe's number (vd) should be set preferably to 50 or more, more preferably to 55 or more, and particularly preferably to 60 or more. Also, the refractive index (nd) should be set preferably to 1.52 or more, more preferably to 1.55 or more, and particularly preferably to 1.57 or more. As such resin, the aliphatic resin is preferable, and the resin having an alicycle structure (for example, the resin having a ring structure such as cyclohexane, norbomane, adamantane, tricyclodecane, tetracyclododecane, or the like. Concretely, the resin set forth in JP-A-10-152551 , JP-A-2002-212500 , JP-A-2003-20334 , JP-A-2004-21 0932 , JP-A-2006-199790 , JP-A-2007-2144 , JP-A-2007-284650 , JP-A-2008-105999 , or the like, for example) is particularly preferable.

In the resin on the low Abbe's number side, the Abbe's number (vd) should be set preferably to 30 or less, more preferably to 25 or less, and particularly preferably to 20 or less. Also, the refractive index (nd) should be set preferably to 1.60 or more, more preferably to 1.63 or more, and particularly preferably to 1.65 or more.

As such resin, the resin having an aromatic structure is preferable. For example, the resin containing the structure such as 9,9'-diarylfluorene, naphthalene, benzothiazole, benzotriazole, or the like (concretely, the resin set forth in JP-A-60-38411 , JP-A-10-67977 , JP-A-2002-47335 , JP-A-2003-238884 , JP-A-2004-83855 , JP-A-2005-325331 , JP-A-2007-238883 , International Publication WO-A-2006/095610, JP-B-2537540 , or the like, for example) is preferable.

Also, it is preferable that, for the purpose of enhancing a refractive index or for the purpose of adjusting the Abbe's number, the inorganic fine particles should be dispersed into the matrix in the resin. As the inorganic fine particle, for example, an oxide fine particle, a sulfide fine particle, a selenide fine particle, and a telluride fine particle can be listed. More concretely, for example, the fine particle consisting of a zirconium oxide, a titanium oxide, a zinc oxide, a tin oxide, a niobium oxide, a cerium oxide, an aluminum oxide, a lanthanum oxide, a yttrium oxide, a zinc sulfide, or the like can be listed.

In particular, it is preferable that the fine particle consisting of a lanthanum oxide, an aluminum oxide, a zirconium oxide, or the like should be dispersed into the resin of the high Abbe's number, while it is preferable that the fine particle consisting of a titanium oxide, a tin oxide, a zirconium oxide, or the like should be dispersed into the resin of the low Abbe's number. Either the inorganic fine particles may be employed solely, or two types or more of the inorganic fine particles may be employed in combination. Also, a composite material containing plural components may be employed.

Also, for various purposes of reducing photocatalytic activity, reducing water absorption, etc., a different type metal may be doped into the inorganic fine particle, a surface layer of the inorganic fine particle may be coated with a different type metal oxide such as silica, alumina, or the like, or a surface of the inorganic fine particle may be modified by a silane coupling agent, a titanate coupling agent, organic acid (carboxylic acids, sulfonic acids, phosphoric acids, phosphonic acids, or the like), a dispersing agent having an organic acid group, or the like. Normally, a number-average particle size of the inorganic fine particle may be set to almost 1 nm to 1000 nm. In this case, the characteristic of the material is changed in some case if the particle size is too small whereas the influence of the Rayleigh scattering becomes conspicuous if the particle size is too large. Therefore, the particle size should be set preferably to 1 nm to 15 nm, more preferably to 2 nm to 10 nm, and particularly preferably to 3 nm to 7 nm. Also, it is desirable that a particle size distribution of the particle size should be set as narrow as possible. The various ways of defining such monodisperse particle may be considered. For example, the numerically specified range set forth in JP-A-2006-160992 belongs to the preferable range of the particle size distribution. Here, the above number-average primary particle size can be measured by the X-ray diffractometer (XRD), the transmission electron microscope (TEM), or the like, for example. The refractive index of the inorganic fine particles should be set preferably to 1.90 to 3.00 at 22 °C and a wavelength of 589 nm, more preferably to 1.90 to 2.70, and particularly preferably to 2.00 to 2.70. From viewpoints of transparency and higher refractive index, a content of inorganic fine particles in a resin should be set preferably to 5 mass % or more, more preferably to 10 to 70 mass %, and particularly preferably to 30 to 60 mass %.

In order to disperse the fine particles uniformly into the resin, it is desirable that the fine particles should be dispersed by using appropriately the dispersing agent containing the functional group that has a reactivity with resin monomers constituting the matrix (e.g., set forth in the embodiment of JP-A-2007-238884 , and the like), the block copolymer constructed by the hydrophobic segment and the hydrophilic segment (e.g., set forth in JP-A-2007-211164), the resin containing the functional group that can produce any chemical reaction with the inorganic fine particle at the polymer terminal or side chain (e.g., set forth in JP-A-2007-238929 , JP-A-2007-238930 , or the like), or the like, for example.

Also, the additive may be mixed appropriately in the resin. For example, the publicly known mold releasing agent such as a silicone-based chemical agent, a fluorine-based chemical agent, a long-chain alkyl group containing chemical agent, or the like, the antioxidizing agent such as hindered phenol, or the like, or the like may be mixed.

Also, as occasion demands, a curing catalyst or an initiator may be mixed in the resin. Concretely, the compound that accelerates a curing reaction (a radical polymerization or an ionic polymerization) by using an action of heat or activation energy rays, which is set forth in JP-A-2005-92099 (paragraph numbers [0063] to [0070]), or the like, for example, can be listed. An amount of addition of the curing accelerator, or the like is different based on a type of the catalyst or the initiator, a difference of the curing reaction part, or the like, and such amount of addition cannot be specified unconditionally. In general, preferably such amount of addition should be set to almost 0.1 to 15 mass % of the whole solid content of the curing reaction resin composite, and more preferably such amount of addition should be set to almost 0.5 to 5 mass %.

In manufacturing the resin by mixing appropriately the above components, when other components can be dissolved in a liquid depolymeric monomer (reactive diluent), or the like, it is not requested to add the solvent separately. However, in other cases, the resin can be manufactured by dissolving respective constitutive components while using the solvent separately. The solvent is not particularly limited and can be appropriately chosen if such solvent does not cause precipitation of the resin composite and can uniformly dissolve or disperse the resin. Concretely, for example, ketones (e.g., acetone, methyl ethyl ketone, methyl isobutyl ketone, etc.), esters (e.g., ethyl acetate, butyl acetate, etc.), ethers (e.g., tetrahydrofuran, 1,4-dioxane, etc.), alcohols (e.g., methanol, ethanol, isopropylene, butanol, ethylene glycol, etc.), aromatic hydrocarbons (e.g., toluene, xylene, etc.), water, and the like can be listed. In case the resin contains the solvent, it is preferable that, after the resin is cast on the substrate and/or the mold member and then the solvent is dried, the operation for transferring a mold form should be done.

Next, the molding die used to mold the lens array will be explained hereunder.

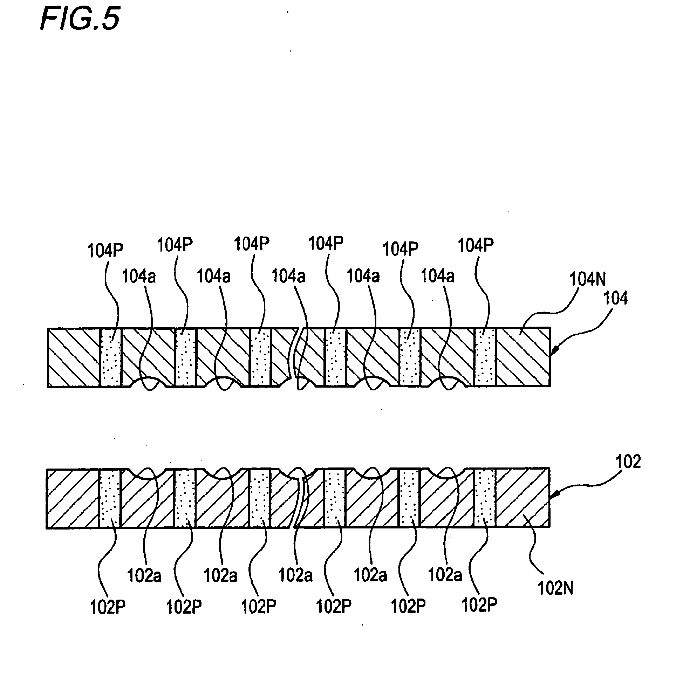

FIG.5 is a view showing a schematic structure of the molding die.

The molding die has a pair of mold members 102, 104. A pair of mold members 102, 104 are placed in upper and lower positions in the vertical direction respectively. The mold member 102 corresponds to a lower mold member, and the mold member 104 corresponds to an upper mold member.

A pair of mold members 102, 104 have mold surfaces that contain lens transfer portions 102a, 104a, which have reversed shapes to shapes of the lens portions of the manufactured lens array, respectively. The molding material is molded by the mold surfaces. The mold surfaces of a pair of mold members 102, 104 have an area, which is equal to an area of the substrate portion 1 of the molded lens array, respectively when viewed from the top. Also, a pair of mold members 102, 104 have a substantially equal diameter of the peripheral portion respectively, and both mold surfaces are shaped into a regular circle respectively.

A porous portion 102P is formed in parts of the mold member 102 except the lens transfer portions 102a respectively. The parts of the mold member 102 other than the porous portions 102P are specified as nonporous portions 102N.

A porous portion 104P is formed in parts of the mold member 104 except the lens transfer portions 104a respectively. The parts of the mold member 104 other than the porous portions 104P are specified as nonporous portions 104N.

The porous portions 102P, 104P are made of the porous material, and the porous portions 102P, 104P are constructed such that a gas is allowed to pass through them. As the porous material, in addition to a cemented carbide and ceramics, a metal containing a huge number of microholes, for example, may be employed. An adequate value of a diameter of the microhole is different depending on the viscosity and the wettability of the molding material. In this case, this diameter is set appropriately to a size that allows the molding material to sink into the microhole at a time of molding and does not cause the locking at a time of curing. When an unevenness on the surface produced by the microholes is converted into a surface roughness Ra, it is preferable that the surface roughness Ra should be set to 100 nm or less, and it is more preferable that the surface roughness Ra should be set to 10 nm or less. It is preferable that the same material as the constitutive material of the lens transfer portions 102a, 104a should be employed as the porous material. Accordingly, when the mold members 102, 104 are thermally expanded, the whole mold members including the porous portions 102P, 104P are expanded uniformly. As a result, a variation of the pitch between the lenses caused upon molding the lens array, and a displacement of centers of the lens surfaces on the upper and lower surfaces of the lens array can be reduced.

It is preferable that a contact angle of the porous portions 102P, 104P to the molding material should be set to 45 degree or more. By doing this, it can be suppressed that the molding material sinks into the insides of the porous portions 102P, 104P, and the releasing of the porous portions 102P, 104P from the molding product can be easily done.

The nonporous portions 102N, 104N are made of the material except the porous material, and the nonporous portions 102N, 104N are constructed such that a gas and the molding material are not allowed to pass through them.

Next, procedures of manufacturing the lens array by using the molding die will be explained hereunder.

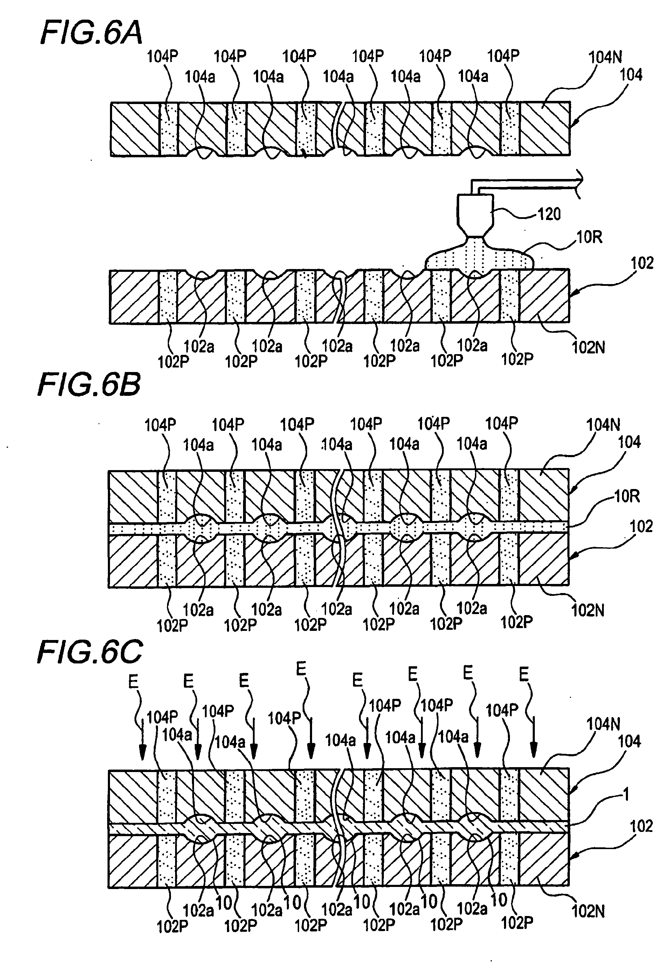

FIGS.6A to 6C are views showing procedures of molding the lens array. Here, an energy-ray curable resin is employed as the molding material.

First, as shown in FIG.6A, a resin 10R is supplied to the mold surface of the mold member 102 by using a dispenser nozzle 120. The resin 10R may be supplied to one location of the mold surface by a predetermined amount or may be supplied separately to a plurality of locations of the mold surface.

After the resin 10R is supplied, as shown in FIG.6B, the mold member 104 is brought close to the mold member 102, and the resin 10R is put between the mold surface of the mold member 102 and the mold surface of the mold member 104. At this time, the resin 10R is deformed to copy the shapes of the lens transfer portions 102a, 104a that are formed on the mold surfaces of the mold member 102 and the mold member 104. In this manner, the resin 10R is molded in a desired shape of the lens array.

Then, as shown in FIG.6C, energy rays E are irradiated from the outside in a state that the resin 10R is put between the mold surface of the mold member 102 and the mold surface of the mold member 104.

In case the resin 10R is an ultraviolet-ray curable resin, a transparent portion is formed in at least one of the mold member 102 and the mold member 104. Then, the ultraviolet rays are passed through the transparent portion and thus the ultraviolet rays are irradiated onto the resin 10R.

In case the resin 10R is a thermosetting resin, the resin 10R is heated and cured from the outside of at least one of the mold member 102 and the mold member 104 by using a heating means such as a heater, or the like.

In this case, the means for curing the resin 10R is not limited to the above examples.

After the resin 10R is cured, the lens array including the substrate portion 1, and a plurality of lens portions 10 that are aligned on the substrate portion 1 and are shaped into the reversed shapes of the lens transfer portions 102a, 104a respectively is obtained.

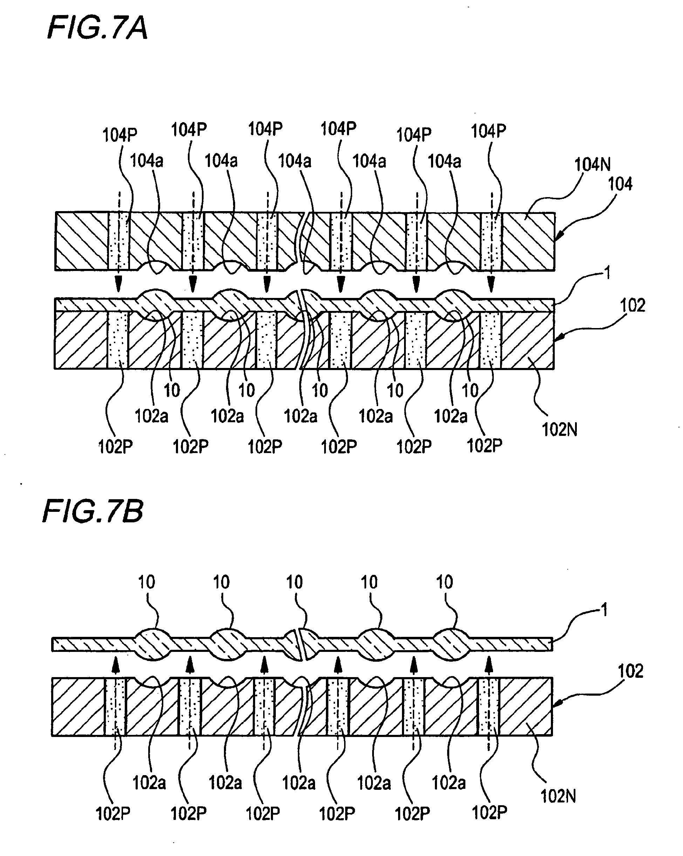

FIGS.7A and 7B are views showing procedures of releasing the lens array from the die.

After the resin 10R is cured, as shown in FIG 7A, a gas is supplied to the porous portions 104P in the mold member 104 from the outside respectively.

The supplied gas passes through the porous portions 104P, and then flows into a space between the mold surface of the mold member 104 and the surface of the lens array. At that time, the peeling of the mold surface of the mold member 104 from the surface of the lens array is caused. In this manner, the lens array is released from one mold member 104. There is no necessity to supply continuously a gas through the porous portions 104P, and the gas may be supplied momentarily. By doing this, the released range is spread outwardly from the part, which is released partially by the gas, through the whole lens array, and as a result the lens array is separated completely from the mold member 104.

After the lens array is released from the mold member 104, as shown in FIG.7B, similarly a gas is supplied to the porous portions 102P of the mold member 102 from the outside respectively such that the gas blows into a space between the mold surface of the mold member 102 and the surface of the lens array. Thus, the lens array is released from the mold member 102. The method of supplying the gas is similar to the case of the mold member 104.

A gas can be chosen appropriately based on the reactivity with the lens array as the molding product, the molding die, and the porous portions. From the aspects of safety and cost, it is preferable that a dried air or nitrogen should be employed as the gas. When the mold releasing is done by using a dried compressed air, normally a pressure of 0.5 MPa (about five time of an atmospheric pressure) or less is applied. Therefore, when the area that is in excess of 20 % of respective mold surfaces of the mold members 102, 104 is formed of the porous material, the lens array can be released against an atmospheric pressure. In this manner, a rate of the porous portion to the nonporous portion, i.e., an area ratio of the porous portion to the nonporous portion, is decided based on the adhesion between the molding material and the mold members 102, 104.

According to the above mold releasing procedures, the lens array can be left on the mold member 102, which is located in the lower position in the vertical direction, out of a pair of mold members 102_{,} 104. Therefore, such a situation can be avoided that the lens array is left on the upper mold member 104 and comes down. Also, the lens array can be released easily from the mold member 102 by supplying a gas.

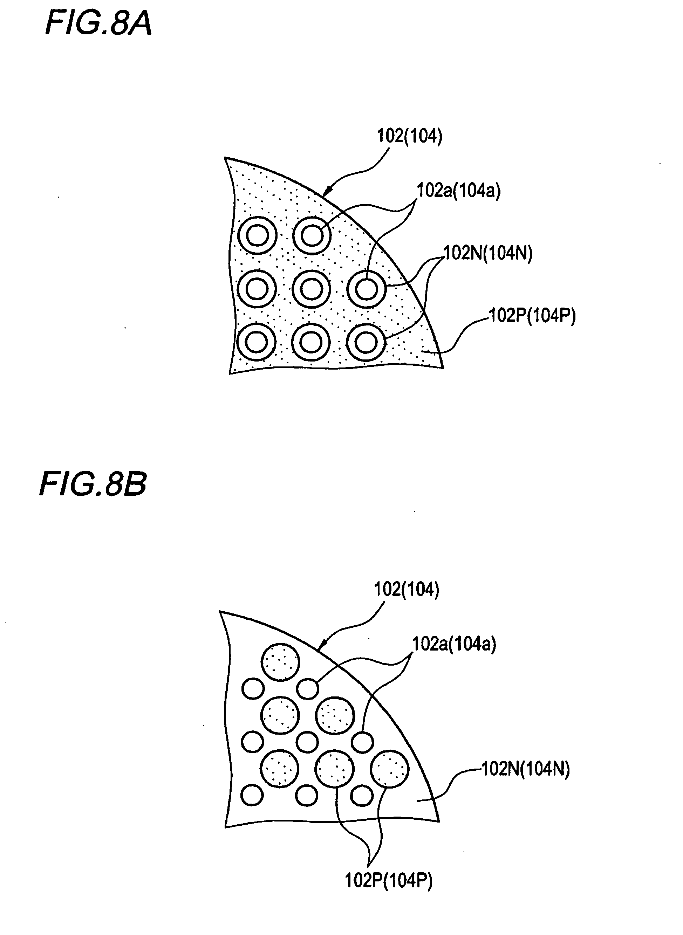

FIG.8A and FIG.8B are views showing a configurative example of the molding die. In this case, following explanation given with reference to FIG.8A and FIG.8B is made by taking the structure of the mold member 102 as an example. Because the structure of the mold member 104 is similar to the structure of the mold member 102, its explanation will be omitted by illustrating the corresponding reference numbers in FIG.8A and FIG.8B.

A plurality of lens transfer portions 102a are formed on the mold surfaces of the mold member 102 shown in FIG.8A. The mold member 102 has a wafer-like base member, and the base member is formed of the porous material. The nonporous portions 102N are provided in the base member to contain the lens transfer portion 102a therein respectively.

The nonporous portion 102N is formed by filling the substantially circular-cylindrical nonporous material in the through hole that extends from the mold surface of the mold member 102 to the opposite side of the mold surface. That is, the part of the base member except the portions in which the nonporous portion 102N is buried respectively constitutes the porous portion 102P in this structure.

A plurality of lens transfer portions 102a are formed on the mold surfaces of the mold member 102 shown in FIG.8B. The mold member 102 has a wafer-like base member, and the base member is formed of the nonporous material. A plurality of porous portions 102P are aligned in the part of the base member except the lens transfer portions 102a.

The porous portion 102P is formed by filling the substantially circular-cylindrical porous material in the through hole that extends from the mold surface of the mold member 102 to the opposite side of the mold surface. That is, the part of the base member except the portions in which the porous portion 102P is buried respectively constitutes the nonporous portion 102N in this structure.

As the mold members 102, 104 in FIG.8A and FIG.8B, the material in which the material constituting the porous portion is sintered with the cemented carbide fine particles whose size is slightly larger than the normal size is employed. As the material of the nonporous portion, the cemented carbide or the metal such as SUS, or the like may be employed. Therefore, the mold members 102, 104 can be manufactured by the precision lathe in the similar way to the die made of the metal.

In the above example, a plurality of porous portions are arranged in the predetermined pattern in the part of the mold members 102, 104 except the lens transfer portions. But the arrangement of the porous portions is not limited to this mode. One or a plurality of porous portions may be provided in at least a part of the part except the lens transfer portions.

The molding die is not limited to the structure of the lens array in the above example. The molding die for molding the optical molding product that is equipped with the substrate portion and one or a plurality of lens portions formed on the substrate portion may be employed. By doing this, the trouble such as the deformation, or the like is not caused in the optical molding product when the molded optical molding product is released from the molding die, and degradation of the optical performances of the resultant optical molding product can be prevented.
(1) As discussed above, it is disclosed that a molding die used to mold integrally an optical molding product, which includes a substrate portion and one or a plurality of lens portions formed on the substrate portion, with a molding material, the molding die includes: mold members that molds the molding material by holding the molding material therebetween. Lens transfer portions are formed on the mold members, each of the lens transfer portions being used to transfer a shape of the corresponding lens portion. At least a part of parts of the mold members except the lens transfer portions constitute porous portions.
(2) In the molding die of (1), each of the mold members has a porous base member, and nonporous portions provided to parts that correspond to the lens transfer portions of the base member.
(3) In the molding die of (1), each of the mold members has a nonporous base member, and the porous portions provided in the base member.
(4) In the molding die according to any one of (1) to (3), the porous portions occupies 20 % or more of a mold surface, which presses the molding material at a time of molding, in each of the mold members.
(5) In the molding die according to any one of (1) to (4), a contact angle of the porous portions to the molding material is 45 degree or more.
(6) Also, it is disclosed that a method of molding an optical molding product, which is applied to mold integrally an optical molding product, which includes a substrate portion and one or a plurality of lens portions formed on the substrate portion, with a molding material, the method includes: molding the molding material by pressing mold members, which contain lens transfer portions each used to transfer a shape of the corresponding lens portion respectively, onto the molding material; curing the molding material; and releasing the optical molding product from the mold members by supplying a gas to porous portions, which are provided in at least a part of parts of the mold members except the lens transfer portions.
(7) In the method of molding an optical molding product of (6), the mold members are used in a pair. The releasing step includes: releasing the optical molding product from one of the mold members by supplying a gas through the porous portions in said one of the mold members; and then releasing the optical molding product from the other of the mold members by supplying a gas through the porous portions in the other of the mold members.
(8) Also, it is disclosed that a lens array molded by using the molding die according to any one of (1) to (5).

## Claims

1. A molding die used to mold integrally an optical molding product, which includes a substrate portion and a plurality of lens portions formed on the substrate portion, with a molding material, the molding die comprising:
mold members (104, 105) that mold the molding material by holding the molding material therebetween,
wherein lens transfer portions (102a, 104a) are formed on the mold members (104, 105), each of the lens transfer portions being used to transfer a shape of the corresponding lens portion, and
parts of the mold members except the lens transfer portions constitute porous portions (102P, 104P), such that the porous portions occupy 20 % or more of a mold surface, which presses the molding material at a time of molding, in each of the mold members.

2. A molding die according to claim 1, wherein
each of the mold members has a porous base member, and nonporous portions provided to parts that correspond to the lens transfer portions of the base member.

3. A molding die according to claim 1, wherein
each of the mold members has a nonporous base member, and the porous portions provided in the base member.

4. A molding die according to any one of claims 1 to 3, wherein
a contact angle of the porous portions to the molding material is 45 degree or more.

5. A method of molding an optical molding product, which is applied to mold integrally an optical molding product, which includes a substrate portion and a plurality of lens portions formed on the substrate portion, with a molding material, the method comprising:
molding the molding material by pressing mold members, which contain lens transfer portions each used to transfer a shape of the corresponding lens portion respectively, onto the molding material;
curing the molding material; and
releasing the optical molding product from the mold members by supplying a gas to porous portions, which are provided in parts of the mold members except the lens transfer portions, wherein the porous portions occupy 20 % or more of a mold surface, which presses the molding material at a time of molding, in each of the mold members.

6. A method of molding an optical molding product, according to claim 5,
wherein
the mold members are used in a pair, and
the releasing step includes:
releasing the optical molding product from one of the mold members by supplying a gas through the porous portions in said one of the mold members; and then
releasing the optical molding product from the other of the mold members by supplying a gas through the porous portions in the other of the mold members.

7. A lens array molded by using the molding die according to any one of claims 1 to 4.

## Patentansprüche

1. Formwerkzeug zum integralen Formen eines optischen Formteils, welches einen Substratteil und mehrere an dem Substratteil ausgebildete Linsenteile enthält, mittels eines Formwerkstoffs, wobei das Formwerkzeug umfasst:
Formelemente (104, 105), die den Formwerkstoff formen, indem sie den Formwerkstoff zwischen sich halten,
wobei Linsentransferteile (102a, 104a) an den Formteilen (104, 105) ausgebildet sind, von denen jedes Linsentransferteil dazu dient, eine Form des entsprechenden Linsenteils zu transferieren, und
Teile der Formelemente mit Ausnahme der Linsentransferteile poröse Abschnitte (102P, 104P) in der Weise bilden, dass die porösen Abschnitte in jedem der Formelemente 20 % oder mehr einer Formoberfläche belegen, welche den Formwerkstoff zur Zeit des Formens presst.

2. Formwerkzeug nach Anspruch 1, bei dem jedes der Formelemente ein poröses Basiselement aufweist, ferner nicht-poröse Abschnitte, die an Teilen vorgesehen sind, die den Linsentransferabschnitten des Basiselements entsprechen.

3. Formwerkzeug nach Anspruch 1, bei dem
jedes der Formelemente ein nicht-poröses Basiselement aufweist, und die porösen Abschnitte innerhalb des Basiselements vorgesehen sind.

4. Formwerkzeug nach einem der Ansprüche 1 bis 3, bei dem
ein Kontaktwinkel der porösen Abschnitte bezüglich des Formwerkstoffs 45° oder mehr beträgt.

5. Verfahren zum Formen eines optischen Formteils, angewendet zum integralen Formen eines optischen Formteils, welches einen Substratteil und eine Mehrzahl von an dem Substratteil ausgebildeten Linsenteilen enthält, mit Hilfe eines Formwerkstoffs, wobei das Verfahren umfasst:
Formen des Formwerkstoffs durch Pressen von Formelementen, die jeweils Linsentransferabschnitte enthalten, die dazu dienen, eine Form des entsprechenden Linsenteils auf den Formwerkstoff zu übertragen;
Aushärten des Formwerkstoffs; und
Lösen des optischen Formteils von den Formelementen durch Zuführen eines Gases zu porösen Abschnitten, die in Teilen der Formelemente mit Ausnahme der Linsentransferabschnitte vorgesehen sind, wobei in jedem der Formelemente die porösen Abschnitte 20 % oder mehr der Formoberfläche belegen, welche den Formwerkstoff zur Zeit des Formens presst.

6. Verfahren zum Formen eines optischen Produkts nach Anspruch 5, bei dem
die Formelemente paarweise verwendet werden, und
der Löseschritt beinhaltet:
Lösen des optischen Formteils von einem der Formelemente durch Zuführen eines Gases durch die porösen Abschnitte in dem einen der Formelemente; und anschließend
Lösen des optischen Formteils von dem anderen der Formelemente durch Zuführen eines Gases durch die porösen Abschnitte des anderen der Formelemente.

7. Mit Hilfe des Formwerkzeugs nach einem der Ansprüche 1 bis 4 geformtes Linsenarray.

## Revendications

1. Matrice de moulage utilisée pour mouler de manière solidaire un produit de moulage optique, qui comprend une partie de substrat et une pluralité de parties de lentille formées sur la partie de substrat, avec un matériau de moulage, la matrice de moulage comprenant :
des éléments de moule (104, 105) qui moulent le matériau de moulage en maintenant le matériau de moulage entre eux,
dans laquelle des parties de transfert de lentille (102a, 104a) sont formées sur les éléments de moule (104, 105), chacune des parties de transfert de lentille étant utilisée pour transférer une forme de la partie de lentille correspondante, et
des parties des éléments de moule excepté les parties de transfert de lentille constituent des parties poreuses (102P, 104P) de sorte que les parties poreuses occupent 20% ou plus d'une surface de moule qui comprime le matériau de moulage au moment du moulage, dans chacun des éléments de moule.

2. Matrice de moulage selon la revendication 1, dans laquelle chacun des éléments de moule a un élément de base poreux et des parties non poreuses prévues sur les parties qui correspondent aux parties de transfert de lentille de l'élément de base.

3. Matrice de moulage selon la revendication 1, dans laquelle chacun des éléments de moule a un élément de base non poreux et les parties poreuses prévues dans l'élément de base.

4. Matrice de moulage selon l'une quelconque des revendications 1 à 3, dans laquelle un angle de contact des parties poreuses par rapport au matériau de moulage est de 45 degrés ou plus.

5. Procédé pour mouler un produit de moulage optique, qui est appliqué pour mouler de manière solidaire un produit de moulage optique, qui comprend une partie de substrat et une pluralité de parties de lentille formées sur la partie de substrat, avec un matériau de moulage, le procédé comprenant les étapes consistant à :
mouler le matériau de moulage en comprimant les éléments de moule, qui contiennent des parties de transfert de lentille, chacune utilisée pour transférer une forme de la partie de lentille correspondante, respectivement sur le matériau de moulage ;
faire durcir le matériau de moulage ; et
démouler le produit de moulage optique des éléments de moule en appliquant un gaz sur les parties poreuses qui sont prévues dans des parties des éléments de moule excepté les parties de transfert de lentille, dans lequel les parties poreuses occupent 20% ou plus d'une surface de moule qui appuie sur le matériau de moulage au moment du moule, dans chacun des éléments de moule.

6. Procédé pour mouler un produit de moulage optique, selon la revendication 5, dans lequel :
les éléments de moule sont utilisés dans une paire, et
l'étape de démoulage comprend les étapes consistant à :
démouler le produit de moulage optique de l'un des éléments de moule en amenant un gaz à travers les parties poreuses dans ledit un des éléments de moule ; et ensuite
démouler le produit de moulage optique de l'autre des éléments de moule en amenant un gaz à travers les parties poreuses dans l'autre des éléments de moule.

7. Réseau de lentilles moulées en utilisant la matrice de moulage selon l'une quelconque des revendications 1 à 4.
